# FASCICULE DE BREVET EUROPEEN

(11) **EP 0 786 746 B1**
(45) Date de publication et mention de la délivrance du brevet: **15.03.2000**
(21) Numéro de dépôt: 97400130.7
(22) Date de dépôt: 21.01.1997
(51) Int. Cl.: G07F 7/02, G06F 17/60, G07G 1/00

(54) **Procédé et dispositif de traitement d'informations codées avec carte à puce**
Verfahren und Vorrichtung zum Behandeln von kodierten Daten mit einer Chipkarte
Method and device for processing coded information with an IC-card

(30) Priorité: 22.01.1996 FR 9600678
(43) Date de publication de la demande: 30.07.1997
(60) Demande divisionnaire: 99120992.5
(73) Titulaire: WELCOME REAL TIME, 13856 Aix en Provence Cedex 3 (FR)
(72) Inventeur: Haddad, Aneace, 83460 Les-Arcs-Sur-Argens (FR); Chevalier, Bernard, 13800 Marseille (FR)
(74) Mandataire: Benech, Frédéric

(56) Documents cités:
- EP-A- 0 512 509
- WO-A-92/14213
- WO-A-95/03570
- WO-A-95/21428
- GB-A- 2 274 349
- US-A- 5 380 991
- US-A- 5 450 938

## Description

La présente invention concerne un procédé de traitement d'informations codées, lors d'une opération d'achat ou de paiement par un client titulaire d'une carte à puce chez un commerçant, dans lequel on lit le contenu de la mémoire de la carte à puce et on imprime ou non un coupon à partir des informations issues du contenu de ladite mémoire.

Elle concerne également un dispositif mettant en oeuvre un tel procédé.

La présente invention trouve une application particulièrement importante, bien que non exclusive, dans le domaine du traitement des cartes de fidélité, présentées au moment du paiement par les clients chez un commerçant, par exemple dans un magasin de détail du type hypermarché ou supermarché, à une station service, ou chez un concessionnaire vendeur de voitures.

Ainsi, avec l'invention, il est possible de moduler une offre commerciale en fonction du comportement a posteriori du titulaire de la carte, ce qui permet de lui accorder des avantages spécifiques de façon personnalisée et immédiate, qui peuvent de plus être enregistrés sur la carte.

On connaît déjà un procédé qui permet d'accorder des avantages spécifiques en fonction de l'attitude comportementale des clients, et qui consiste essentiellement à envoyer un coupon de réduction par la poste, quelque temps après l'opération déclencheuse d'achat ou de paiement par le titulaire.

Un tel procédé présente des inconvénients. Il génère en effet des délais importants et présente une fiabilité limitée (perte de coupons, changement d'adresse.

Un des problèmes techniques résolu par l'invention consiste à éliminer ces délais importants, en accordant un avantage au client au moment même du paiement par ce dernier ou de façon plus générale de l'opération déclenchant l'avantage.

Le document Banking Technology, février 1995 décrit dans l'article "Smart times head" aux pages 2,3 des cartes électroniques pouvant fournir au vendeur des informations sur les habitudes d'achat des clients. Un type de carte peut aussi stocker des points de fidelité en mémoire.

Le commerçant va ainsi pouvoir reconnaître un client en fonction de la fréquence de ses passages et du volume de ses dépenses. Il pourra alors lui accorder automatiquement un avantage spécifique déterminé, et ce de façon instantanée.

Dans ce but l'invention propose notamment un procédé de traitement d'informations codées, lors d'une opération d'achat ou de paiement par un client titulaire d'une carte à puce chez un commerçant, dans lequel on lit le contenu de la mémoire de la carte à puce et on imprime ou non un coupon à partir des informations issues du contenu de ladite mémoire,
caractérisé en ce que, la mémoire de la carte à puce comportant un premier fichier d'identification, dit fichier Membre, identifiant le client porteur de la carte, un deuxième fichier de comptabilisation, dit fichier Points, et un troisième fichier, dit fichier Comportement, concernant le comportement du titulaire de la carte avec le ou les commerçants utilisateurs,
on effectue un traitement algorithmique déterminé en fonction d'une part de la date de l'opération et d'autre part des informations contenues dans lesdits fichiers dont le fichier Comportement,
puis on écrit des données dans le fichier Points, on écrit de nouvelles informations dans le fichier Comportement, et on imprime ou non ledit coupon, à partir du résultat dudit traitement algorithmique.

Dans des modes de réalisation avantageux, on a de plus recours à l'une et/ou à l'autre des dispositions suivantes :
- le traitement algorithmique comporte une étape d'incrémentation ou de décrémentation du fichier Point d'un nombre de points prédéterminés ;
- on n'imprime le coupon que si le nombre de points contenu dans le fichier Points est supérieur à une valeur déterminée ;
- on n'imprime le coupon et/ou on n'incrémente ou décrémente le fichier Points que si le fichier Membre correspond à des critères déterminés ;
- on incrémente plus ou moins le fichier Points en fonction du montant de l'opération d'achat ou de paiement ;
- on incrémente plus ou moins le fichier Points en fonction de la fréquence et/ou du caractère de première, deuxième ou xième visite du titulaire de la carte sur une période de temps de durée déterminée ;
- on introduit des informations correspondant à l'opération dans une mémoire d'un terminal de paiement situé chez ledit commerçant,
on compare lesdites informations introduites avec des informations stockées dans des moyens de stockage et concernant des séries d'opérations prédéterminés, et
on traite les résultats de ces comparaisons pour imprimer un coupon et/ou écrire dans le fichier Points ;

Il est ainsi possible de réaliser des opérations promotionnelles limitées dans le temps et sur un ensemble de commerçants appartenant à un même réseau.
- on chiffre l'accès aux fichiers par une procédure d'encryptage dite du triple DES (Data Encryption Standard).

L'invention propose également un dispositif de traitement d'informations codées, lors d'une opération d'achat ou de paiement par un utilisateur titulaire d'une carte à puce, comprenant des moyens de lecture de données codées dans la mémoire de la carte à puce, des moyens de calcul et des moyens d'impression d'un coupon,
caractérisé en ce que, la mémoire de la carte à puce comportant un premier fichier d'identification, dit fichier Membre, identifiant le client titulaire de la carte, un deuxième fichier de comptabilisation, dit fichier Points, et un troisième fichier, dit fichier Comportement, concernant le comportement du titulaire de la carte avec le ou les commerçants utilisateurs,
les moyens de calcul comportent des moyens de traitement algorithmique de données en fonction d'une part de la date de l'opération et d'autre part des informations contenues dans lesdits fichiers, dont le fichier Comportement,
et en ce que le dispositif comporte des moyens d'écriture de nouvelles informations dans le fichier Points et dans le fichier Comportement à partir dudit traitement algorithmique, les moyens d'impression d'un coupon étant agencés pour imprimer ou non ledit coupon à partir des informations issues du contenu desdits fichiers et dudit traitement algorithmique.

Avantageusement, le dispositif comporte de plus :
- des moyens d'introduction de données correspondant à ladite opération dans une mémoire intermédiaire et d'affichage de données,
- des moyens de stockage d'informations codées concernant une ou plusieurs opérations,
- des moyens de comparaison entre les données introduites dans ladite mémoire intermédiaire et des informations stockées dans lesdits moyens de stockage d'informations,
- des moyens de traitement des résultats de ces comparaisons,
- et des moyens agencés pour imprimer ou non automatiquement le coupon à partir des informations issues du contenu de la mémoire de la carte à puce, commandés par lesdits moyens de traitement desdits résultats.

L'invention sera mieux comprise à la lecture de la description qui suit d'un mode particulier de réalisation donné à titre d'exemple non limitatif.

La description se réfère aux dessins qui l'accompagnent dans lesquels :
- la figure 1 montre un schéma général d'un dispositif selon un mode de réalisation de l'invention.
- la figure 2 est un schéma bloc, partiel, d'un mode de réalisation de la mémoire de la carte à puce dans le dispositif selon l'invention.
- la figure 3 est un schéma bloc diagramme du procédé de traitement des informations selon le mode de réalisation de l'invention plus particulièrement décrit ici.

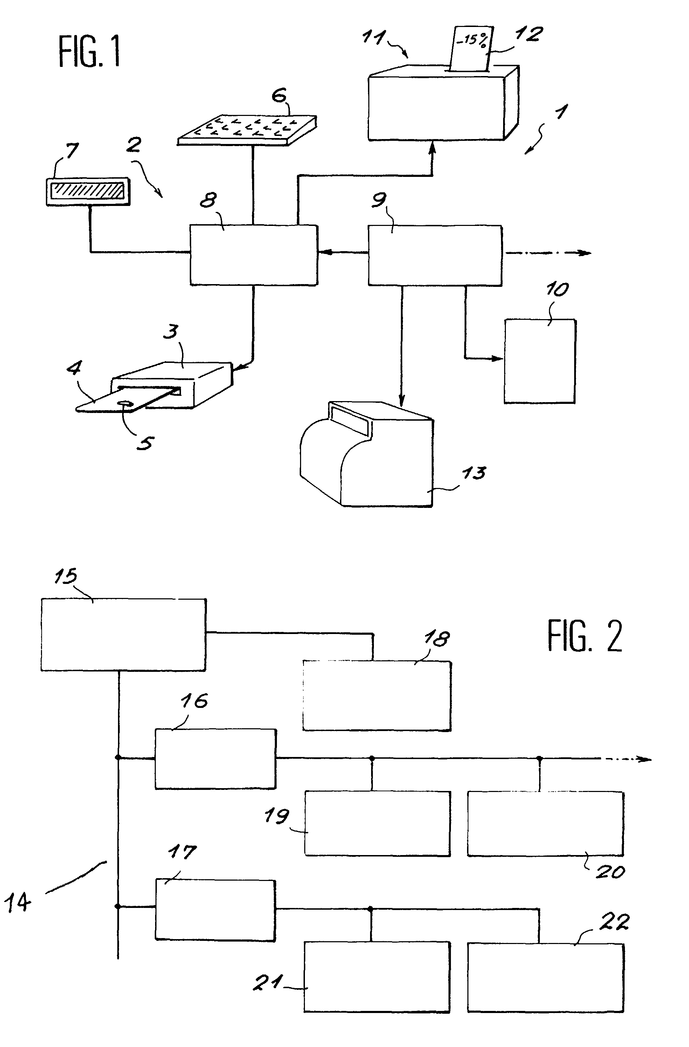

La figure 1 montre un dispositif 1 comprenant un terminal 2 de paiement muni d'un lecteur 3 de carte 4 à puce 5.

Le terminal de paiement est par exemple du type commercialisé sous la référence Delta 15 de la société française Schlumberger.

Les cartes à puce utilisables avec l'invention sont par exemple des cartes vendues sous les références MP-COS de la société française Gemplus ou ME 2000 de la société française Schlumberger.

Elles peuvent être bancaires, privatives de crédit ou des cartes de fidélité.

Le terminal 2 comprend un clavier 6, un écran d'affichage 7 et un calculateur 8 programmable en fonction d'algorithmes déterminés de façon connue en elle-même.

Le calculateur 8 est relié au lecteur 3 via un circuit de lecture/écriture et à un micro-ordinateur 9 lui-même relié à une mémoire de masse 10.

Le dispositif 1 comprend également des moyens d'impression 11 d'un coupon 12 relié au calculateur 8 et à une caisse 13 enregistreuse et imprimante de factures, par exemple via un ordinateur 9.

Le calculateur 8 est relié, éventuellement via l'ordinateur 9, à des moyens (non représentés) entièrement à distance du site où est implanté le dispositif 1 et agencés pour assurer la cohérence des traitements et/ou des informations traitées et collectées par différents dispositifs sur différents sites.

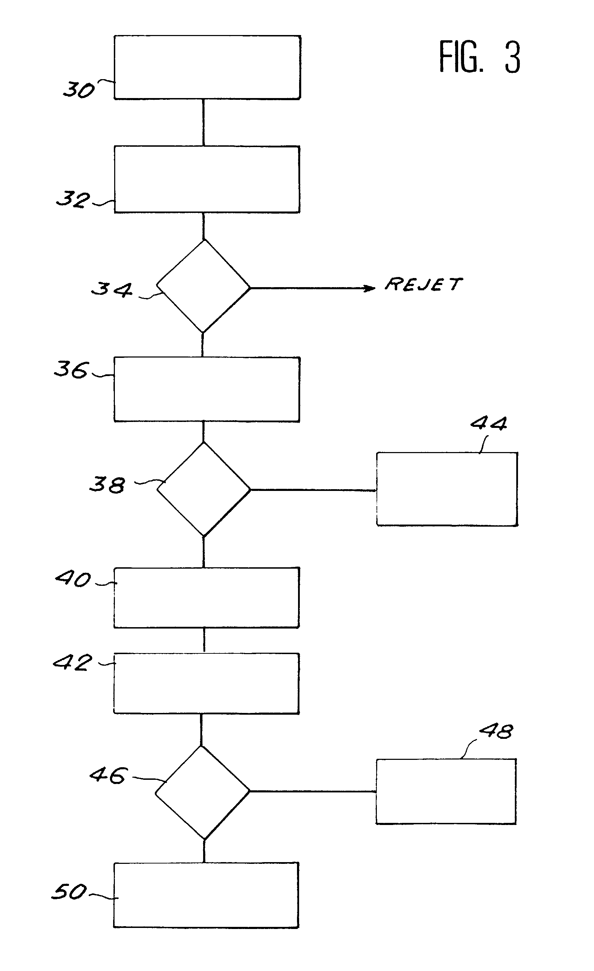

On a représenté sur la figure 2 l'organisation d'un mode de réalisation de la mémoire 14 de la puce 5 de la carte 4.

La carte comprend plusieurs applications, la mémoire 14 comprenant un répertoire principal ou racine 15.

Elle est organisée en répertoires 16, 17, etc.

Les informations concernant le titulaire ou porteur de la carte sont contenues dans un fichier 18 dit fichier Membre, sous le répertoire principal 15.

Il est prévu un répertoire Système 16 comprenant par exemple un ficher 19 concernant la carte elle-même et d'autres types de fichiers 20 connus en eux-mêmes.

Selon le mode de réalisation de l'invention plus particulièrement décrit ici, la mémoire 14 comprend un répertoire 17 dit "Répertoire Couponing" qui comprend le fichier Comportement 21 et le fichier Points 22.

Des modes de réalisation du fichier Membre 18, du fichier Comportement 21 et du fichier Points 22 selon l'invention sont décrits ci-après à titre d'exemple.

### Fichier Membre 18

Code lecture : Libre
Code mise à jour : RCode01

| **Champ** | **Format** | **Largeur** |
|---|---|---|
| Numéro de la carte | 999999999 | 9 |
| Type | Alpha | 2 |
| Version | 99 | 2 |
| Applications présentes | O / N | 9 |
| Mois/année de personnalisation (fabrication) | aamm | 4 |
| Mois/année de 1ère utilisation | aamm | 4 |
| Mois/année de péremption | aamm | 4 |
| Réservé | Alpha | 46 |

### Fichier Comportement 21

Code lecture : Libre
Code mise à jour : RCode12

| **Champ** | **Format** | **Largeur** |
|---|---|---|
| Nombre de commerçants maxi | 99 | 2 |
| Nombre de commerçants enregistrés | 99 | 2 |
| Réservé | Alpha | 16 |
| Commerçants (jusqu'au nb commerçants enreg.) : | | |
| Code commerçant | 99999 | 5 |
| Code activité | Alpha | 1 |

| | | |
|---|---|---|
| Date première visite | aammjj | 6 |
| Date dernière visite | aammjj | 6 |
| Nombre visites ce mois | 99 | 2 |
| Dépenses ce mois | 99999 | 5 |
| Nombre visites cette année | 999 | 3 |
| Dépenses cette année | 999999 | 6 |
| Nombre visites total | 999 | 3 |
| Dépenses total | 999999 | 6 |

### Fichier Points 22 (Compteur de points)

| | |
|---|---|
| Clé lecture solde | Libre |
| Clé débit | RKdeb1 |
| Clé crédit | Rkcred1 |
| PIN (pour accès au débit) | Rcode13 |

Dans un mode de réalisation avantageux il est prévu une gestion de la sécurité des informations sur la carte par cryptage des codes en fonction des numéros de cartes.

L'application comprend par exemple deux codes d'accès aux fichiers et deux clés d'accès au fichier Points. Les codes mères ou les clés mères sont intégrés dans le terminal 2.

Ils sont utilisés pour calculer des codes et des clés diversifiés, qui seront ensuite comparés aux codes et clés inscrits sur la carte. Chaque carte comprend son propre jeu unique de codes et clés.

Cette diversification se fait par la procédure du triple DES (Data Encryption Standard), appliquée à la fois sur les codes mères (ou les clés mères) et le numéro de la carte.

Les codes mères et clés mères intégrés dans le terminal sont par exemple :
- Code01: Code mère de mise à jour du fichier Membre
- Code12: Code mère de mise à jour du fichier Comportement
- Kauth1: Clé mère d'authentification du fichier Points
- Kcred1: Clé mère de crédit du fichier Points

Les codes mères ou les clés mères sont par ailleurs et par exemple diversifiés de la manière suivante :
1. Les codes mères ou les clés mères (16 octets) sont partagés en deux parties égales de 8 octets KL (partie gauche) et KR (partie droite)
2. N (les 8 premiers octets du n° carte) est chiffré par KL : R1 = DES (KL,N)
3. R1 sur 8 octets est déchiffré par KR : R2 = DES-1 (KR,R1)
4. R2 sur 8 octets est chiffré par KL : R = DES (KL,R2)

R est le résultat sur 8 octets de la diversification par triple DES d'un code ou d'une clé mère, et représente donc la valeur inscrite sur la carte.

On va maintenant décrire un exemple de fonctionnement du dispositif de la figure 1 en référence à la figure 3.

L'utilisateur client, titulaire de la carte, introduit la carte 4 dans le lecteur 3 (étape 30), les fichiers Membre, Comportement et Points sont alors lus (étape 32).

Une étape test 34 sur la validité de la carte (date de péremption) est alors effectuée par comparaison avec la date du jour.

Puis le montant de l'achat est introduit (étape 36) soit via la caisse 13 et le micro-ordinateur 9, soit via le clavier 6.

Si la somme est supérieure à une valeur déterminée (test 38), on effectue alors un traitement algorithmique 40 en fonction des informations contenues dans le fichier Membre, le fichier Comportement et le fichier Points.

L'opération débouche sur une étape 42 d'incrémentation du fichier Points d'un nombre de points déterminés par exemple en fonction du nombre d'opérations effectuées par le titulaire de la carte dans le mois.

Sinon (étape 44), l'écran 7 affiche par exemple un message "pas de réduction".

Une étape test 46 est ensuite prévue comparant le nombre de points du fichier Points à un volume seuil déterminé.

Si le nombre de points est inférieur à cette valeur, on émet un message en 48. Si il est supérieur, on imprime (étape 50) un coupon de réduction d'un montant déterminé.

L'invention permet ainsi au titulaire de la carte d'obtenir deux types d'avantage séparément ou simultanément :
- un crédit de points sur un compteur de points électronique dans la puce de la carte,
- un bon de réduction imprimé au moment de l'achat, à valoir sur l'achat même ou sur un prochain achat.

On donne ci-après plusieurs exemples de fonctionnement.

Le commerçant peut choisir, par exemple, de donner 2 points à son clients lors de sa première visite du mois, 4 points à la deuxième visite et 6 points à la troisième visite de chaque mois.

Un autre commerçant peut choisir de lier le crédit de points à un montant de transaction. Ainsi, à sa première visite, le client recevra, par exemple, un nombre de point égal à 10 % de son achat. Pour toute visite suivante, le crédit de points sera de 5 %.

Un autre commerçant choisira d'offrir un bon de réduction, à valoir sur un achat chez lui. Par exemple, le commerçant peut accorder 25 % de réduction à ses clients qui viennent pour la première fois, et 10 % aux autres.

Le bon de réduction peut avoir une valeur en points. Dans ce cas, le bon est donné au client contre un débit de points. Par exemple, le commerçant propose un bon de 25 % de réduction, contre un montant de 10 points - le bon ne sera imprimé que si la carte dispose d'un minimum de 10 points.

L'invention permet également de cibler des cartes précises. Le commerçant identifie préalablement les numéros de cartes dans le fichier Membre, qui recevront un avantage lors de leurs prochaines visites.

Cette liste de cartes peut également être téléchargée par un système central via la liaison externe décrite en référence à la figure 1.

Un avantage de l'invention est de pouvoir formuler des offres en fonction du comportement client chez d'autres commerçants, chaque commerçant appartenant à un "groupe d'activité", identifié par un champ présent dans le fichier Comportement décrit ci-avant.

Cet aspect de l'invention peut ainsi être utilisé pour identifier les clients qui dépensent peu chez le commerçant, mais beaucoup dans un secteur d'activité proche de celui du commerçant. Les clients ainsi identifiés peuvent donc se voir proposer des avantages plus forts.

On a donné ci-après un exemple de paramétrage de l'algorithme d'émission d'avantages selon l'invention.

### Paramètrage de l'algorithme

| **Catégorie** | **Paramètre** | **Nature** | **Description** |
|---|---|---|---|
| Paramètres généraux | Achat minimum | Montant en centimes | Seuil en dessous duquel l'opération est trop petite pour être considérée une visite |
| | Une visite par jour ? | Oui | Seule première opération dans un même jour sera considérée comme une visite |
| | | Non | N opérations un même jour = N visites |
| | Fonction multi-visite | Non activée | Appliquer les paramètres de "Visite 1" pour toute visite. Ne pas mettre à jour le fichier Comportement dans la carte |
| | | même Mois | Distinguer entre 1ère, 2ème et 3ème visite dans un même mois |
| | | même Année | ... dans une même année |
| | | depuis Création Carte | ... depuis la création de la carte |
| | Bonus Seuil | Montant | Seuil pour l'émission de points bonus |
| | Bonus points | 999 | Montant des points bonus |
| Paramètres visite 1 | Calcul points | Non activée | Pas de crédit ou débit de points lors de la première visite |
| | | Crédit | |
| | | Débit | |
| | Calcul Points | Fixe | Le champ "Valeur Points" est une somme fixe de points |
| | | Pourcentage | Le champ "Valeur Points" est un pourcentage du montant de l'opération |
| | Valeur Points | 999 | Valeur Points 999 en points (jusqu'à 999), ou en pourcentage (jusqu'à 99,9%) |
| | Texte coupon | Non activée | Aucun message supplémentaire à imprimer sur le ticket |
| | | ASCII 2 x 20 | Impression 2 lignes de 20 caractères, en plus des infos concernant l'ancien solde, les points acquis, et le nouveau solde |
| Paramètres visite 2 | Fonction points | cf visite 1 | |
| | Calcul Points | | |
| | Valeur Points | | |
| | Texte coupon | | |
| Paramètres visite 3 | Fonction Points | cf visite 1 | |
| | Calcul Points | | |
| | Valeur Points | | |
| | Texte coupon | | |
| Paramètres visites 4 et + | Fonction Points | cf visite 1 | |
| | Calcul Points | | |
| | Valeur Points | | |
| | Texte coupon | | |

Comme il va de soi, et comme il résulte de ce qui précède, la présente invention ne se limite pas au mode de réalisation de l'invention plus particulièrement décrit ici. En variante, le traitement algorithmique peut être programmable à distance.

## Revendications

1. Procédé de traitement d'informations codées, lors d'une opération d'achat ou de paiement par un client titulaire d'une carte (4) à puce (5) chez un commerçant, dans lequel on lit le contenu de la mémoire (14) de la carte à puce et on imprime ou non un coupon (12) à partir des informations issues du contenu de ladite mémoire,
caractérisé en ce que, la mémoire de la carte à puce comportant un premier fichier d'identification (18), dit fichier Membre, identifiant le client titulaire de la carte, un deuxième fichier de comptabilisation (22), dit fichier Points, et un troisième fichier (21), dit fichier Comportement, concernant le comportement du titulaire de la carte avec le ou les commerçants utilisateurs,
on effectue un traitement algorithmique déterminé en fonction d'une part de la date de l'opération et d'autre part des informations contenues dans lesdits fichiers dont le fichier Comportement,
le traitement algorithmique comportant une étape d'incrémentation ou de décrémentation du fichier Point d'un nombre de points prédéterminés en fonction de la fréquence et/ou du caractère de première, deuxième ou xième visite du titulaire de la carte sur une période de temps de durée déterminée,
on n'imprime le coupon que si le nombre de points contenu dans le fichier Points est supérieur à une valeur déterminée
puis on écrit des données dans le fichier Points,
on écrit de nouvelles informations dans le fichier Comportement,
et on imprime ou non ledit coupon, à partir du résultat dudit traitement algorithmique.

2. Procédé selon la revendication 1, caractérisé en ce que on n'imprime le coupon et/ou on n'incrémente ou décrémente le fichier Points que si le fichier Membre correspond à des critères déterminés.

3. Procédé selon l'une quelconque des revendications 1 et 2, caractérisé en ce que on incrémente plus ou moins le fichier Points en fonction du montant de l'opération d'achat ou de paiement.

4. Procédé selon l'une quelconque des revendications précédentes, caractérisé en ce que
on introduit des informations correspondant à l'opération dans une mémoire d'un terminal (2) de paiement situé chez ledit commerçant,
on compare lesdites informations introduites avec des informations stockées dans des moyens (9) de stockage et concernant des séries d'opérations prédéterminés, et
on traite les résultats de ces comparaisons pour imprimer un coupon (12) et/ou écrire dans le fichier Points (22).

5. Procédé selon l'une quelconque des revendications précédentes caractérisé en ce que on chiffre l'accès aux fichiers par une procédure d'encryptage dite du triple DES.

6. Dispositif (1) de traitement d'informations codées, lors d'une opération d'achat ou de paiement par un utilisateur titulaire d'une carte (4) à puce (5), comprenant des moyens (3) de lecture de données codées dans la mémoire de la carte à puce, des moyens (8, 9) de calcul et des moyens (11) d'impression d'un coupon (12),
caractérisé en ce que, la mémoire (14) de la carte à puce comportant un premier fichier d'identification (18), dit fichier Membre, identifiant le client titulaire de la carte, un deuxième fichier de comptabilisation (22), dit fichier Points, et un troisième fichier (21), dit fichier Comportement, concernant le comportement du titulaire de la carte avec le ou les commerçants utilisateurs,
les moyens (8) de calcul comportent des moyens de traitement algorithmique déterminé en fonction d'une part de la date de l'opération et d'autre part des informations contenues dans lesdits fichiers dont le fichier Comportement,
et en ce que le dispositif comporte des moyens (11) d'écriture d'informations dans le fichier Points et dans le fichier Comportement à partir dudit traitement algorithmique déterminé,
les moyens d'impression d'un coupon étant agencés pour imprimer ou non ledit coupon à partir des informations issues du contenu desdits fichiers et dudit traitement algorithmique.

7. Dispositif selon la revendication 6, caractérisé en ce que il comporte
- des moyens d'introduction de données correspondant à ladite opération dans une mémoire de stockage intermédiaire et d'affichage (7) de données,
- des moyens (9) de stockage d'informations codées concernant une ou plusieurs opérations,
- des moyens de comparaison entre les données introduites dans ladite mémoire intermédiaire et des informations stockées dans lesdits moyens de stockage d'informations,
- des moyens de traitement des résultats de ces comparaisons,
- et des moyens (11) agencés pour imprimer automatiquement un coupon, commandés par lesdits moyens de traitement desdits résultats et à partir des informations issues du contenu de la mémoire de ladite carte à puce.

## Patentansprüche

1. Verfahren zur Verarbeitung von kodierten Informationen anlässlich eines Kauf- oder Zahlvorgangs durch einen Inhaber einer Chipkarte (4, 5) bei einem Händler, bei dem der Inhalt des Speichers (14) der Chipkarte gelesen und aus den von dem Inhalt des Speichers kommenden Informationen ein Kupon (12) gedruckt oder nicht gedruckt wird,
**dadurch gekennzeichnet,**
**dass** der Speicher der Chipkarte eine erste Identifikationsdatei (18), mit Kundendatei bezeichnet, die den Inhaber der Karte identifiziert, eine zweite Buchungsdatei (22), mit Punktdatei bezeichnet, und eine dritte Datei (21), mit Verhaltensdatei bezeichnet, enthält, die das Verhalten des Karteninhabers bei dem oder den Verbrauchern betrifft,
**dass** eine algorithmische Verarbeitung erfolgt, die einerseits durch das Datum des Vorgangs und andererseits durch Informationen bestimmt ist, die in den Dateien in der Verhaltensdatei enthalten sind,
**dass** die algorithmische Verarbeitung einen Schritt für die Inkrementierung oder die Dekrementierung der Punktkartei um eine Anzahl an Punkten enthält, die in Abhängigkeit von der Häufigkeit und/oder dem Verlauf des ersten, zweiten oder x-ten Besuchs des Karteninhabers über eine Zeitperiode mit einer vorbestimmten Dauer bestimmt ist,
**dass** der Kupon nur gedruckt wird, wenn die Anzahl an Punkten in der Punktdatei oberhalb eines vorbestimmten Wertes liegt,
**dass** dann Daten in die Punktdatei geschrieben werden,
**dass** neue Informationen in die Verhaltensdatei geschrieben werden, und
**dass** der Kupon aufgrund des Ergebnisses dieser algorithmischen Verarbeitung gedruckt oder nicht gedruckt wird.

2. Verfahren nach Anspruch 1,
**dadurch gekennzeichnet,**
**dass** der Kupon nur dann gedruckt wird und/oder die Punktdatei nur dann inkrementiert oder dekrementiert wird, wenn die Mitgliederdatei bestimmten Kriterien entspricht.

3. Verfahren nach einem der Ansprüche 1 und 2,
**dadurch gekennzeichnet,**
**dass** die Punktdatei als Funktion des Umfangs des Kauf- oder Zahlvorgangs mehr oder weniger inkrementiert wird.

4. Verfahren nach einem der vorangehenden Ansprüche,
**dadurch gekennzeichnet,**
**dass** Informationen eingeführt werden, die dem Vorgang in einem Speicher einer Zahlstelle (2) bei dem Händler entsprechen,
**dass** diese eingeführten Informationen mit Informationen verglichen werden, die in den Speichermitteln (9) gespeichert sind und die Reihen von vorbestimmten Vorgängen betreffen, und
**dass** die Ergebnisse dieser Vergleiche verarbeitet werden, um einen Kupon (12) zu drucken und/oder ein Schreiben in der Punktdatei (22) zu bewirken.

5. Verfahren nach einem der vorangehenden Ansprüche,
**dadurch gekennzeichnet,**
**dass** der Zugang zu den Dateien durch einen mit Dreifach-DES bezeichneten Verschlüsselungsvorgang verschlüsselt wird.

6. Vorrichtung (1) zur Verarbeitung von kodierten Informationen anlässlich eines Kauf- oder Zahlvorgangs durch einen Inhaber einer Chipkarte (4, 5) mit Mitteln (3) zum Lesen von kodierten Daten in dem Speicher der Chipkarte, Rechenmitteln (8, 9) und Mitteln (11) zum Drucken eines Kupons (12),
**dadurch gekennzeichnet,**
**dass** der Speicher (14) der Chipkarte eine erste Identifizierungsdatel (18), mit Mitgliederdatei bezeichnet, die den Inhaber der Karte identifiziert, eine zweite Buchungsdatei (22), mit Punktdatei bezeichnet, und eine dritte Datei (21), mit Verhaltensdatei bezeichnet, enthält, die das Verhalten des Karteninhabers bei dem oder den Händlern betrifft,
**dass** die Rechenmittel (8) Mittel zur algorithmischen Verarbeitung enthalten, die in ihrer Funktion einerseits durch den Zeitpunkt des Vorgangs und andererseits durch Informationen bestimmt ist, die in den Dateien der Verhaltensdatei enthalten sind, und
**dass** die Vorrichtung Mittel (11) zum Schreiben der Informationen in die Punktdatei und in die Verhaltensdatei aus der vorbestimmten algorithmischen Verarbeitung enthält,
**dass** die Mittel zum Drucken eines Kupons dafür eingerichtet sind, den Kupon aus den Informationen von dem Inhalt der Dateien und der algorithmischen Verarbeitung zu drucken oder nicht zu drucken.

7. Vorrichtung nach Anspruch 6, dadurch gekennzeichnet, dass sie folgendes enthält:
• Mittel zur Einführung von Daten, die dem genannten Vorgang in einem Speicher für die Zwischenspeicherung und die Darstellung (7) der Daten entsprechen,
• Mittel (9) zur Speicherung der kodierten Informationen, die einen oder mehrere Vorgänge betreffen,
• Mittel zum Vergleich der in dem Zwischenspeicher eingeführten Daten und der in den Speichermitteln für die Informationen gespeicherten Informationen,
• Mittel zur Verarbeitung der Ergebnisse dieser Vergleiche, und
• Mittel (11) zum automatischen Drucken eines Kupons, die durch die Mittel zur Verarbeitung der Ergebnisse und durch die Informationen aus dem Inhalt des Speichers der Chipkarte gesteuert sind.

## Claims

1. Method for processing encoded information, during a purchase or payment transaction by a customer holding a card (4) with a chip (5) (smart card) at the premises of a trader, in which the content of the memory (14) of the smart card is read and a coupon (12) is or is not printed on the basis of information from the content of said memory,
characterised in that, the memory of the smart card comprising a first identification file (18), known as a Member file, identifying the customer holding the card, a second accounting file (22), known as a Points file, and a third file (21), known as a Behaviour file, concerning the behaviour of the card holder with the user trader(s),
a specified algorithmic processing operation is carried out according to on the one hand the date of the transaction and on the other hand the information contained in said files, including the Behaviour file,
the algorithmic processing comprising a step of incrementing or decrementing the Point file by a predetermined number of points according to the frequency and/or nature of the first, second or xth visit of the card holder over a specified period of time,
the coupon is printed only if the number of points contained in the Points file is greater than a given value
then the data are written to the Points file,
new information is written to the Behaviour file,
and said coupon is or is not printed, on the basis of the result of said algorithmic processing.

2. Method according to Claim 1, characterised in that the coupon is only printed and/or the Points file is only incremented or decremented if the Member file corresponds to specified criteria.

3. Method according to any one of Claims 1 and 2, characterised in that the Points file is incremented more or less according to the amount of the purchase or payment transaction.

4. Method according to any one of the preceding claims, characterised in that information corresponding to the transaction is entered in a memory of a payment terminal (2) located in the premises of said trader,
said entered information is compared with information stored in storage means (9) and concerning predetermined series of transactions, and
the results of these comparisons are processed in order to print a coupon (12) and/or write to the Points file (22).

5. Method according to any one of the preceding claims characterised in that access to the files is encrypted by an encryption procedure known as triple DES.

6. Device (1) for processing encoded information, during a purchase or payment transaction by a user holding a card (4) with a chip (5) (smart card) comprising means (3) for reading encoded data in the memory of the smart card, calculation means (8, 9)and means (11) for printing a coupon (12),
characterised in that, the memory (14) of the smart card comprising a first identification file (18), known as a Member file, identifying the customer holding the card, a second accounting file (22), known as a Points file, and a third file (21), known as a Behaviour file, concerning the behaviour of the card holder with the user trader(s),
the calculation means (8) comprise specified algorithmic processing means according to on the one hand the date of the transaction and on the other hand the information contained in said files, including the Behaviour file,
and in that the device comprises means (11) for writing information to the Points file and to the Behaviour file on the basis of said specified algorithmic processing,
the means for printing a coupon being arranged so as to print said coupon or not, on the basis of the information coming from said files and said algorithmic processing.

7. Device according to Claim 6, characterised in that it comprises
- means for entering data corresponding to said transaction in a memory for intermediate storage and for the display (7) of data,
- means (9) for storing encoded information regarding one or more transactions,
- means for comparison between data entered into said intermediate memory and the information stored in said information storage resources,
- means for processing the results of these comparisons,
- and means (11) arranged for automatically printing a coupon, controlled by said means for processing said results and on the basis of the information coming from the content of the memory of said smart card.
